# EUROPEAN PATENT APPLICATION

(11) **EP 3 214 892 A1**
(43) Date of publication of application: **06.09.2017**
(21) Application number: 16751455.3
(22) Date of filing: 17.05.2016
(51) Int. Cl.: H04W 76/02, H04W 88/08

(54) **METHOD AND DEVICE FOR DETECTING USER AT SHORT RANGE**

(30) Priority: 11.11.2015 CN 201510764832
(71) Applicant: LE Holdings (Beijing) Co., Ltd., Beijing 100025 (CN); Leauto Intelligent Technology (BEIJING) Co. Ltd, Beijing 100020 (CN)
(72) Inventor: XIE, Lingfei, Beijing 100020 (CN); WANG, Mujin, Beijing 100020 (CN)
(74) Representative: Gosnall, Toby
(86) International application number: PCT/CN2016/082325
(87) International publication number: WO 2017/080156

(57) **Abstract**

A method and a device for detecting users in a close range are disclosed, where the method is performed at a wireless access device side, the method includes: establishing connections with mobile terminals of multiple users in a close range; and determining a user attendance condition according to a pre-generated user information matching list and physical addresses corresponding to the mobile terminals of the multiple users, where the user information matching list is pre-generated according to user information of all users to be detected and a physical address corresponding to a mobile terminal of each of the all users.

## Description

### CROSS REFERENCE TO RELATED APPLICATIONS

This application is based upon and claims priority to Chinese Patent Application NO. 201510764832.5, titled "Method and device for detecting users in close range", filed on November 11, 2015, the entire contents of which are incorporated herein by reference.

### TECHNICAL FIELD

The disclosure relates to the technical field of internet, and particularly to a method and an apparatus for detecting users in a close range.

### BACKGROUD

In many activities such as a group travel or a meeting, the number of attendees needs to be counted in order to determine a list of attendees who are present and who are absent. Commonly, the list of attendees who are present and who are absent is determined by a working personal making a roll call, i.e., calling names of the attendees one by one. However, it is difficult to make a roll callc when the number of attendees is large, for example, when there are several hundreds of attendees. In addition, an incorrect result may be obtained when a roll call is made in the above manner because of name repetition among the attendees, which may lead to an incorrect list of attendees who are present and attendees who are not present.

### SUMMARY

In view of aforesaid problems, the disclosure is put forward to provide a method and an apparatus for detecting users in a close range to overcome aforesaid problems or at least partly solve aforesaid problems.

According to an aspect of the disclosure, a method for detecting users in a close range is provided, where the method is performed at a wireless access device side, the method includes:
establishing connections with mobile terminals of multiple users in a close range; and
determining a user attendance condition according to a pre-generated user information matching list and physical addresses corresponding to the mobile terminals of the multiple users,
where the user information matching list is generated according to user information of all users to be detected and a physical address corresponding to a mobile terminal of each of the all users.

Further, the user information matching list may be generated by:
acquiring the user information of the all users to be detected; and
generating matching information for each of the all users by matching the physical address corresponding to the mobile terminal of each of the all users to be detected with the user information of the all users to be detected, and recording the matching information for each of the all users into the user information matching list.

Further, the generating matching information for each of the all users by matching the physical address corresponding to the mobile terminal of each of the all users to be detected with the user information of the all users to be detected, and recording the matching information for each of the all users into the user information matching list may include:
for each of the all users, establishing a connection with a mobile terminal of the user, matching a physical address corresponding to the mobile terminal of the user with the user information of the all users to be detected and generating matching information for the user, recording the matching information for the user into the user information matching list, and disconnecting the connection with the mobile terminal of the user.

Further, the establishing connections with mobile terminals of multiple users in a close range may include:
establishing connections with the mobile terminals of the multiple users in a close range by means of wireless signals transmitted by a wireless access device.

Further, the determining a user attendance condition according to a pre-generated user information matching list and physical addresses corresponding to the mobile terminals of the multiple users may include:
matching the physical addresses corresponding to the mobile terminals of the multiple users with the pre-generated user information matching list, to determine the user attendance condition, and generating an absent user list.

Further, the close range may be a range covered by a local area network of the wireless access device.

According to another aspect of the disclosure, an apparatus for detecting users in a close range is provided, which includes:
a connection module adapted to establish connections with mobile terminals of multiple users in a close range; and
a matching module adapted to determine a user attendance condition according to a pre-generated user information matching list and physical addresses corresponding to the mobile terminals of the multiple users,
where the user information matching list is generated according to user information of all users to be detected and a physical address corresponding to a mobile terminal of each of the all users.

Further, the device may further include:
a generation module adapted to acquire the user information of the all users to be detected; and generate matching information for each of the all users by matching the physical address corresponding to the mobile terminal of each of the all users to be detected with the user information of the all users to be detected, and record the matching information for each of the all users into the user information matching list.

Further, the generation module may be further adapted to:
for each of the all users, establish a connection with a mobile terminal of the user, match a physical address corresponding to the mobile terminal of the user with the user information of the all users to be detected and generate matching information for the user, recording the matching information for the user into the user information matching list, and disconnect the connection with the mobile terminal of the user.

Further, the connection module may be further adapted to establish connections with the mobile terminals of the multiple users in a close range by means of wireless signals transmitted by a wireless access device.

Further, the matching module may be further adapted to:
match the physical addresses corresponding to the mobile terminals of the multiple users with the pre-generated user information matching list, to determine the user attendance condition, and generate an absent user list.

Further, the close range may be a range covered by a local area network of the wireless access device.

According to the technical solution provided by the present application, connections are established with mobile terminals of multiple users in a close range, and then the user attendance condition is determined according to the pre-generated user information matching list and the physicals addresses corresponding to the mobile terminals of the multiple users. With the technical solution provided by the present application, the user attendance condition of users in a close range can be determined in a convenient, rapid, intelligent and accurate manner with a wireless access device thereby optimizing the manner in which the roll call is made and enhancing the efficiency of the roll call.

The above description is only a summary of the technical scheme of the disclosure. In order to know the technical means of the disclosure more clearly so that it can be put into effect according to the content of the description, and to make aforesaid and other purpose, features and advantages of the disclosure clearer, embodiments of the disclosure are listed below.

### BRIEF DESCRIPTION OF THE DRAWINGS

By reading the detailed description of the preferably selected embodiments below, various other advantages and benefits become clear for a person of ordinary skill in the art. The drawings are only used for showing the purpose of the preferred embodiments and are not intended to limit the present invention. And in the whole drawings, same drawing reference signs are used for representing same components. In the drawings:
Figure 1 shows a flow chart of a method for detecting users in a close range according to an embodiment of the application;
Figure 2 shows a flow chart of a method for detecting users in a close range according to another embodiment of the application;
Figure 3 shows a schematic diagram showing the functional configuration of a device for detecting users in a close range according to an embodiment of the application;
Figure 4 shows a schematic diagram showing the functional configuration of a device for detecting users in a close range according to another embodiment of the application;
Figure 5 schematically shows a block diagram showing a computer device for executing the method for detecting users in a close range according to an embodiment of the application; and
Figure 6 schematically shows a storage unit for holding or carrying program codes for implementing the method for detecting users in a close range according to an embodiment of the application.

### DETAILED DESCRIPTION

The disclosure is described in further detail with reference to the drawings and embodiments below. While the exemplary embodiments of the disclosure have been described with reference to the attached drawings, this disclosure may, however, be embodied in different forms and should not be construed as limited to the embodiments set forth herein; rather, these embodiments are provided so that this disclosure will be thorough and complete, and will fully convey the concept of the disclosure to a person of ordinary skill in the art.

Each mobile terminal such as a cell phone has a unique MAC address, i.e. a physical address. Therefore, a wireless access device may determine an identity of a user of a mobile terminal according to the physical address of the mobile terminal connected therewith, thereby implementing user detection.

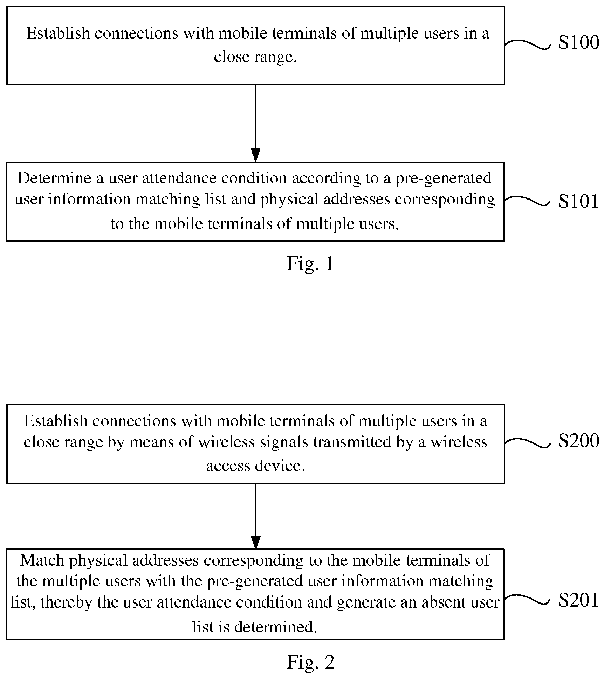

Figure 1 illustrates a flow chart of a method for detecting users in a close range according to an embodiment of the application. The method is implemented on a wireless access device side. As shown in Figure 1, the method includes the following steps S100 and S101.

In step S100, connections are established with mobile terminals of multiple users in a close range.

For example, step S100 is performed when a user attendance condition needs to be determined. The wireless access device establishes connections with mobile terminals of multiple users in a close range, where the close range is a coverage area of a local area network of the wireless access device. The coverage area of the local area network of the wireless access device will not be very large and commonly is dozens of square meters. In addition, the wireless access device theoretically has no limitation on mobile terminals which are allowed to establish connections.

In step S101, a user attendance condition is determined according to a pre-generated user information matching list and physical addresses corresponding to the mobile terminals of multiple users.

Since the close range is the coverage area of the local area network of the wireless access device and the coverage area of the local area network will not be very large, a user of a mobile terminal which is able to establish connection with the wireless access device may be considered to be present, and a user of a mobile terminal which cannot establish connection with the wireless access device may be considered to be absent. In addition, the user information matching list is pre-generated according to user information of all users to be detected and a physical address corresponding to a mobile terminal of each of the all users. For example, the user information of the all users to be detected may include user-related information of the all users to be detected such as names, cell phone numbers, companies to which the users belong, job titles and the like. The user information of the all users to be detected may further include other information according to actual requirements and will not be limited herein.

After connections are established with mobile terminals of multiple users in a close range in step S100, physical addresses corresponding to these mobile terminals are acquired by the wireless access device. The user attendance condition can be determined according to the pre-generated user information matching list and the physical addresses corresponding to the mobile terminals of multiple users in step S101, thereby which users are present and which users are absent are conveniently and clearly learned.

With the method for detecting users in a close range according to this embodiment, which is implemented on a wireless access device side, connections are established with mobile terminals of multiple users in a close range, and then the user attendance condition is determined according to the pre-generated user information matching list and the physical addresses corresponding to the mobile terminals of multiple users. With the technical solution provided by the present application, the user attendance condition of users in a close range can be determined in a convenient, rapid, intelligent and accurate manner with a wireless access device, thereby the manner in which the roll call is made is optimized.

Figure 2 illustrates a flow chart of a method for detecting users in a close range according to another embodiment of the application. The method is implemented on the wireless access device side. As shown in Figure 2, the method includes the following steps S200 and S201.

In step S200, connections are established with mobile terminals of multiple users in a close range by means of wireless signals transmitted by a wireless access device.

The close range is the coverage area of the local area network of the wireless access device. The wireless access device may transmit wireless signals, and mobile terminals of multiple users within the close range may establish connections with the wireless access device by means of the wireless signals. For example, step S200 is performed when the user attendance condition needs to be determined, where the mobile terminals of the multiple users within the close range establish connections with the wireless access device by means of the wireless signals transmitted by the wireless access device.

In step S201, physical addresses corresponding to the mobile terminals of the multiple users are matched with the pre-generated user information matching list thereby determining the user attendance condition and an absent user list is generated.

Since the user of the mobile terminal which is able to establish connection with the wireless access device may be considered to be present, and the user of the mobile terminal which cannot establish connection with the wireless access device may be considered to be absent, after connections are established with mobile terminals of multiple users in a close range in step S200, physical addresses corresponding to the mobile terminals with which connections are established are acquired by the wireless access device. Then these physical addresses are matched with the pre-generated user information matching list one by one. Particularly, users of the mobile terminals to which the physical addresses being successfully matched to the re-generated user information matching list correspond are determined to be present users, and the rest of the users recorded in the pre-generated user information matching list are determined to be absent users, thereby the user attendance condition is determined. The absent user list may be generated according to the determined user attendance condition in order to learn which users are absent.

In order to generate the user information matching list, information of all users to be detected may be acquired firstly, then the physical address corresponding to the mobile terminal of each of the all users to be detected is matched with the user information of the all users to be detected , to generate matching information for each of the all users, and the matching information for each of the all users is recorded in to the user information matching list.

Particularly, the technical solution provided according to the present application may be applied in an activity involving multiple users such as a meeting or a group travel. Therefore, the information of all users to be detected can be provided by an event organizer. For example, the information of the all users to be detected which is provided by the event organizer can be imported into the wireless access device using software managing the wireless access device, thereby the wireless access device is enabled to acquire the information of the all users to be detected. For example, for a large conference, assuming that 100 users are supposed to attend the conference, information of all users to be detected, which is provided by the event organizer, may be information related to the 100 users such as names, cell phone numbers, companies to which the users belong, job titles and the like of the 100 users. In addition, in order that physical address corresponding to the mobile terminal of each of the all users to be detected can be clearly matched with the information of all users to be detected, the mobile terminal of each of the all users may be connected with the wireless access device successively. For each of the all users, a connection is established with a mobile terminal of the user, a physical address corresponding to the mobile terminal of the user is matched with the user information of the all users to be detected, matching information for the user is generated, the matching information for the user is recorded into the user information matching list, and then the connection with the mobile terminal of the user is disconnected. The user information matching list may be pre-generated by those skilled in the art by other means, which will not be limited herein.

For example, the technical solution provided according to the present application may be applied by a tour group. Assuming that the tour group includes 100 members and 1 tourist guide, the tourist guide obtains a user information matching list including matching information for all of the members by matching a physical address corresponding to a cell phone (i.e. mobile terminal) of each of the 100 members successively using a wireless access device such as a portable router. When the tourist guide call together the members at the end of the period of free activities, the tourist guide needs to confirm whether the members are all present. At this moment, the tourist guide may ask the members who are present to connect their cell phones to the wireless access device, then the physical addresses corresponding to the mobile terminals of the members who are present are matched with the pre-generated user information matching list by the wireless access device to determine the user attendance condition and generate the absent user list. Thus, a list of absent members may be clearly and effectively determined with the absent user list.

With the method for detecting users in a close range provided according to this embodiment, which is implemented at the wireless access device side, connections are established with mobile terminals of multiple users in a close range by means of the wireless signals transmitted by the wireless access device, and then physical addresses corresponding to the mobile terminals of the multiple users are matched with the pre-generated user information matching list to determine the user attendance condition and generate the absent user list. With the technical solution provided by the present application, physical addresses corresponding to the mobile terminals of the all users are clearly matched with the user information of the all users using the wireless access device, and the user attendance condition of users in a close range can be determined in a convenient, rapid, intelligent and accurate manner, thereby the manner in which the roll call is made is optimized and the efficiency of the roll call is enhanced.

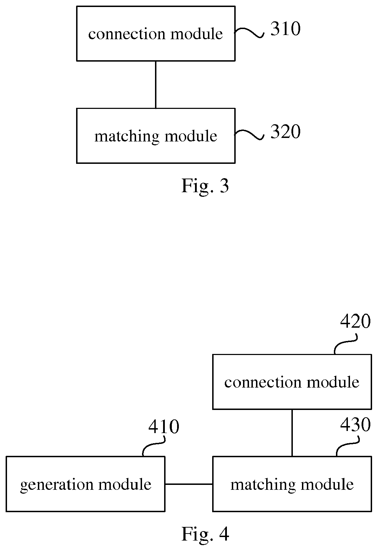

Figure 3 shows a schematic diagram showing the functional configuration of a device for detecting users in a close range according to an embodiment of the application. As shown in Figure 3, the device includes a connection module 310 and a matching module 320.

The connection module 310 is adapted to establish connections with mobile terminals of multiple users in a close range.

For example, the connection module 310 may establish connections with mobile terminals of multiple users when a user attendance condition is required to be determined.

The matching module 320 is adapted to determine a user attendance condition according to a pre-generated user information matching list and physical addresses corresponding to the mobile terminals of the multiple users.

The user information matching list is pre-generated according to user information of all users to be detected and a physical address corresponding to a mobile terminal of each of the all users. After the connection module 310 establishes connections between the mobile terminals of the multiple users, the matching module 320 determines the user attendance condition according to the pre-generated user information matching list and physical addresses corresponding to the mobile terminals of the multiple users, to conveniently and clearly learn which users are present and which users are absent.

The device for detecting users in a close range is provided according to the embodiment, where the connection module establishes connections with mobile terminals of multiple users in a close range, and then the matching module determines the user attendance condition of the multiple users according to the pre-generated user information matching list and physical addresses corresponding to the mobile terminals of the multiple users. With the technical solution provided by the present application, the user attendance condition of users in a close range can be determined in a convenient, rapid, intelligent and accurate manner thereby the manner in which the roll call is made is optimized and the efficiency of the roll call is enhanced.

Figure 4 shows a schematic diagram showing the functional configuration of a device for detecting users in a close range according to another embodiment of the application. As shown in Figure 4, the device includes a generation module 410, a connection module 420 and a matching module 430.

The generation module 410 is adapted to acquire the user information of the all users to be detected; generate matching information for each of the all users by matching the physical address corresponding to the mobile terminal of each of the all users to be detected with the user information of the all users to be detected, and record the matching information for each of the all users into the user information matching list.

For example, the user information of the all users may be imported into the wireless access device with software managing the wireless access device thereby the generation module 410 is enabled to acquire the user information of the all users for subsequent user attendance condition determination.

In order to clearly match the physical address corresponding to the mobile terminals of the all users to be detected with the user information of the all users to be detected, the generation module 410 is further adapted to, for each of the all users, establish a connection with a mobile terminal of the user, match a physical address corresponding to the mobile terminal of the user with the user information of the all users to be detected and generate matching information for the user, record the matching information for the user into the user information matching list, and disconnect the connection with the mobile terminal of the user.

The connection module 420 is adapted to establish connections with mobile terminals of the multiple users in a close range by means of wireless signals transmitted by the wireless access device.

The matching module 430 is adapted to match the physical addresses corresponding to the mobile terminals of the multiple users with the pre-generated user information matching list, in order to determine the user attendance condition, and generate an absent user list.

After the user information matching list including all users is acquired by the generation module, the connection module 420 and the matching module 430 are triggered to determine the user attendance condition.

With the device for detecting users in a close range provided according to this embodiment, the generation module acquires user information of all users to be detected, generates matching information for each of the all users by matching the physical address corresponding to the mobile terminal of each of the all users to be detected with the user information of the all users to be detected, and records the matching information for each of the all users into the user information matching list, then the connection module establishes connections with mobile terminals of the multiple users in a close range, finally, the matching module determines the user attendance condition by matching the physical addresses corresponding to the mobile terminals of the multiple users with the pre-generated user information matching list, and generates an absent user list. With the technical solution provided by the present application, physical addresses corresponding to the mobile terminals of the all users are clearly matched with the user information of the all users, and the user attendance condition of users in a close range can be determined in a convenient, rapid, intelligent and accurate manner ,thereby the manner in which the roll call is made is optimized and the efficiency of the roll call is enhanced.

The algorithm and display provided here have no inherent relation with any specific computer, virtual system or other devices. Various general-purpose systems can be used together with the teaching based on this. According to the description above, the structure required to construct this kind of system is obvious. Besides, the disclosure is not directed at any specific programming language. It should be understood that various programming language can be used for achieving the content of the disclosure described here, and above description of specific language is for disclosing the optimum embodiment of the disclosure.

The description provided here explains plenty of details. However, it can be understood that the embodiments of the disclosure can be implemented without these specific details. The known methods, structure and technology are not shown in detail in some embodiments, so as not to obscure the understanding of the description.

Similarly, it should be understood that in order to simplify the present disclosure and help to understand one or more of the various aspects of the disclosure, the various features of the disclosure are sometimes grouped into a single embodiment, drawing, or description thereof. However, the method disclosed should not be explained as reflecting the following intention: that is, the disclosure sought for protection claims more features than the features clearly recorded in every claim. To be more precise, as is reflected in the following claims, the aspects of the disclosure are less than all the features of a single embodiment disclosed before. Therefore, the claims complying with a specific embodiment are explicitly incorporated into the specific embodiment thereby, wherein every claim itself as an independent embodiment of the disclosure.

Those skilled in the art can understand that adaptive changes can be made to the modules of the devices in the embodiment and the modules can be installed in one or more devices different from the embodiment. The modules or units or elements in the embodiment can be combined into one module or unit or element, and furthermore, they can be separated into more sub-modules or sub-units or sub-elements. Except such features and/or process or that at least some in the unit are mutually exclusive, any combinations can be adopted to combine all the features disclosed by the description (including the attached claims, abstract and figures) and any method or all process of the device or unit disclosed as such. Unless there is otherwise explicit statement, every feature disclosed by the present description (including the attached claims, abstract and figures) can be replaced by substitute feature providing the same, equivalent or similar purpose.

In addition, a person skilled in the art can understand that although some embodiments described here comprise some features instead of other features included in other embodiments, the combination of features of different embodiments means falling into the scope of the disclosure and forming different embodiments. For example, in the following claims, any one of the embodiments sought for protection can be used in various combination modes.

The various components embodiments of the disclosure can be realized by hardware, or realized by software modules running on one or more processors, or realized by combination thereof. A person skilled in the art should understand that microprocessor or digital signal processor (DSP) can be used for realizing some or all functions of some or all components of the devices for displaying the website authentication information according to the embodiments in the disclosure in practice. The disclosure can also realize one part of or all devices or programs (for example, computer programs and computer program products) used for carrying out the method described here. Such programs for realizing the disclosure can be stored in computer readable medium, or can possess one or more forms of signal. Such signals can be downloaded from the Internet website or be provided at signal carriers, or be provided in any other forms.

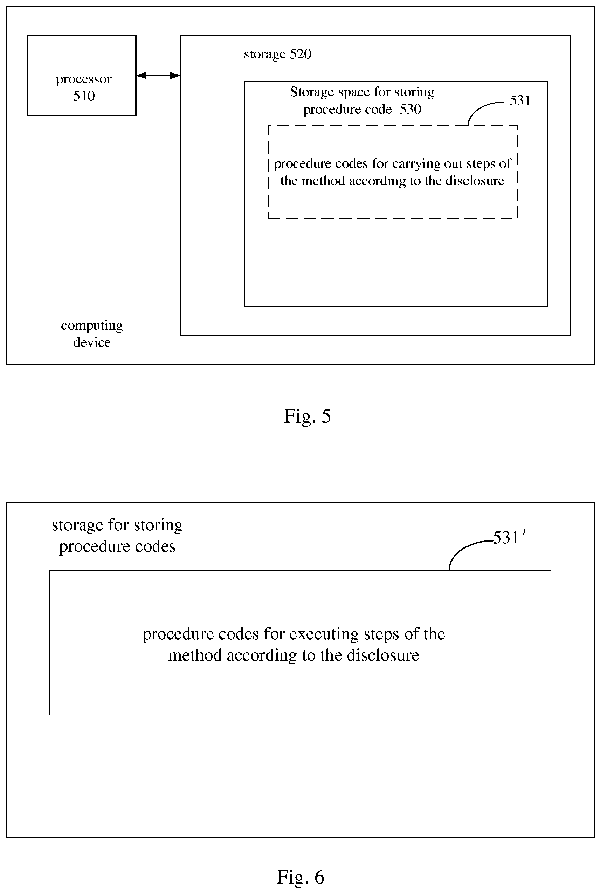

For example, Fig. 5 shows a diagram for a computing device for executing the method for detecting users in a close range according to the disclosure. The computing device traditionally comprises a processor 510 and a computer program product in the form of storage 520 or a computer readable medium. The storage 520 can be electronic storage such as flash memory, EEPROM (Electrically Erasable Programmable Read-Only Memory), EPROM, hard disk or ROM, and the like. Storage 520 possesses storage space 530 for storing procedure code 531 for executing any steps of aforesaid method. For example, storage space 530 for procedure code can comprise various procedure codes 531 used for realizing any steps of aforesaid method. These procedure codes can be read out from one or more computer program products or write in one or more computer program products. The computer program products comprise procedure code carriers such as hard disk, Compact Disc (CD), memory card or floppy disk and the like. These computer program products usually are portable or fixed storage cell as said in Fig. 6. The storage cell can possess memory paragraph, storage space like the storage 520 in the computing device in Fig. 5. The procedure code can be compressed in, for example, a proper form. Generally, storage cell comprises computer readable code 531' for executing steps of the method according to the disclosure, i.e. the code can be read by processors such as the processor 510 and the like. When the codes run on a computer device, the computer device will carry out various steps of the method described above.

It should be noticed that the embodiments are intended to illustrate the disclosure and not limit this disclosure, and a person skilled in the art can design substitute embodiments without departing from the scope of the appended claims. In the claims, any reference marks between brackets should not be constructed as limit for the claims. The word "comprise" does not exclude elements or steps that are not listed in the claims. The word "a" or "one" before the elements does not exclude that more such elements exist. The disclosure can be realized by means of hardware comprising several different elements and by means of properly programmed computer. In the unit claims several devices are listed, several of the devices can be embodied by a same hardware item. The use of words first, second and third does not mean any sequence. These words can be explained as name.

## Claims

1. A method for detecting users in a close range, wherein the method is performed at a wireless access device side, the method comprises:
establishing connections with mobile terminals of a plurality of users in a close range; and
determining a user attendance condition according to a pre-generated user information matching list and physical addresses corresponding to the mobile terminals of the plurality of users,
wherein the user information matching list is pre-generated according to user information of all users to be detected and a physical address corresponding to a mobile terminal of each of the all users.

2. The method for detecting users in a close range according to claim 1, wherein the user information matching list is generated by:
acquiring the user information of the all users to be detected; and
generating matching information for each of the all users by matching the physical address corresponding to the mobile terminal of each of the all users to be detected with the user information of the all users to be detected, and recording the matching information for each of the all users into the user information matching list.

3. The method for detecting users in a close range according to claim 2, wherein the generating matching information for each of the all users by matching the physical address corresponding to the mobile terminal of each of the all users to be detected with the user information of the all users to be detected, and recording the matching information for each of the all users into the user information matching list comprises:
for each of the all users, establishing a connection with a mobile terminal of the user, matching a physical address corresponding to the mobile terminal of the user with the user information of the all users to be detected and generating matching information for the user, recording the matching information for the user into the user information matching list, and disconnecting the connection with the mobile terminal of the user.

4. The method for detecting users in a close range according to claim 1, wherein the establishing connections with mobile terminals of a plurality of users in a close range comprises:
establishing connections with the mobile terminals of the plurality of users in a close range by means of wireless signals transmitted by a wireless access device.

5. The method for detecting users in a close range according to claim 1, wherein the determining a user attendance condition according to a pre-generated user information matching list and physical addresses corresponding to the mobile terminals of the plurality of users comprises:
matching the physical addresses corresponding to the mobile terminals of the plurality of users with the pre-generated user information matching list, to determine the user attendance condition, and generating an absent user list.

6. The method for detecting users in a close range according to any one of claims 1 to 5, wherein the close range is a range covered by a local area network of the wireless access device.

7. An apparatus for detecting users in a close range, comprising:
a connection module adapted to establish connections with mobile terminals of a plurality of users in a close range; and
a matching module adapted to determine a user attendance condition according to a pre-generated user information matching list and physical addresses corresponding to the mobile terminals of the plurality of users,
wherein the user information matching list is pre-generated according to user information of all users to be detected and a physical address corresponding to a mobile terminal of each of the all users.

8. The apparatus for detecting users in a close range according to claim 7, further comprising:
a generation module adapted to acquire the user information of the all users to be detected; generate matching information for each of the all users by matching the physical address corresponding to the mobile terminal of each of the all users to be detected with the user information of the all users to be detected, and record the matching information for each of the all users into the user information matching list.

9. The apparatus for detecting users in a close range according to claim 7, wherein the generation module is further adapted to:
for each of the all users, establish a connection with a mobile terminal of the user, match a physical address corresponding to the mobile terminal of the user with the user information of the all users to be detected and generate matching information for the user, record the matching information for the user into the user information matching list, and disconnect the connection with the mobile terminal of the user.

10. The apparatus for detecting users in a close range according to claim 7, wherein the connection module is further adapted to establish connections with the mobile terminals of the plurality of users in a close range by means of wireless signals transmitted by a wireless access device.

11. The apparatus for detecting users in a close range according to claim 7, wherein the matching module is further adapted to:
match the physical addresses corresponding to the mobile terminals of the plurality of users with the pre-generated user information matching list, to determine the user attendance condition, and generate an absent user list.

12. The apparatus for detecting users in a close range according to any one of claims 7 to 11, wherein the close range is a range covered by a local area network of the wireless access device.
